# EUROPEAN PATENT SPECIFICATION

(11) **EP 3 158 901 B1**
(45) Date of publication and mention of the grant of the patent: **11.12.2019**
(21) Application number: 16194475.6
(22) Date of filing: 18.10.2016
(51) Int. Cl.: A47J 31/60

(54) **COFFEE MACHINE ASSEMBLY**
KAFFEEMASCHINENANORDNUNG
ARRANGEMENT D'UNE MACHINE À CAFÉ

(30) Priority: 20.10.2015 IT UB20154733
(43) Date of publication of application: 26.04.2017
(73) Proprietor: Cadamuro, Ezio, 31017 Paderno Del Grappa (IT)
(72) Inventor: Cadamuro, Ezio, 31017 Paderno Del Grappa (IT)
(74) Representative: Gallo, Luca

(56) References cited:
- EP-A1- 2 620 084
- WO-A1-2009/127983
- WO-A1-2012/107246
- KR-B1- 101 395 950
- 3m Espe: "Sof-Lex Spiral Finishing and Polishing System", , 2013, XP055493546, Retrieved from the Internet: URL:http://multimedia.3m.com/mws/media/865 344O/sof-lex-spiral-finishing-and-polishin g-system-tds-ebu.pdf [retrieved on 2018-07-18]
- Norton Saint-Gobain: "R369 ALUMINIUM OXIDE FLAP WHEELS", , 1 April 2013 (2013-04-01), XP055493743, Retrieved from the Internet: URL:https://www.nortonabrasives.com/sga-co mmon/files/document/Brochure-Wheels-Flap-N eonR369-8363.pdf [retrieved on 2018-07-19]

## Description

The present invention relates to a coffee machine assembly comprising a rotating brush, for the cleaning of a coffee machine filter.

As it is known, there are substantially two ways for extracting coffee grounds from coffee machines filters: the more classic approach consists in hitting the filter and or the filter holder against a support suitably positioned in a box for collecting the coffee grounds, the other approach instead uses appropriate devices which allow the cleaning to be obtained mechanically, using, for instance, rotating hard blades or water jets.

In the first case, it is not uncommon to have issues associated with the sticking of coffee grounds within the filter, which are then reused for an indefinite number of times, with obvious negative consequences on the final product.

Although less often, the same issue happens in practice also when using hard mechanical brushes which do not perfectly adapt to the filter's profile.

In fact, in such cases, a very high level of attention is required during the cleaning operation, which however happens in a short or very short time.

Brushes for cleaning of coffee machine filters are generally known from patent documents EP 2 620 084 A1, KR 101 395 950 B1 and WO 2009/127983.

The object of the invention is therefore to solve the above-mentioned problems, by implementing a rotating brush, for the cleaning of a coffee machine filter, capable of completely removing coffee grounds from the filter.

Another object of the invention is to implement a brush which, once no longer usable, can be reprocessed with the wet part of the waste.

Yet another object of the invention is to implement a brush which can be mounted on any existing machine using hard-type brushes, or can be provided with an appropriate handle for a manual use.

Another object of the invention is to implement a brush which allows a perfect cleaning of the filter with a more delicate action, so as to preserve the integrity of the filter itself and reduce noise, while nevertheless maintaining a very high cleaning effect.

Another object of the invention is to implement a brush which can be realized in different configurations, according to the user's needs.

Yet another object of the invention is to implement a brush which, thanks to its peculiar realization characteristics, can ensure the highest standards of reliability and safety during use.

The above-described object, as well as the other mentioned objects and others, which will appear more clearly in the following, is achieved by a coffee machine assembly as defined in claim 1.

Further characteristics and advantages will result more clearly from the description of preferred, but not limiting, embodiments of a coffee machine assembly according to the invention, illustrated by means of example and in a non-limiting manner in the attached figures, in which:
figure 1 is a perspective exploded view of a brush according to the invention, of a filter holder, of a filter and of a motor;
figure 2 is a perspective view of the brush according to the invention;
figure 3 is a side cut view of the brush according to the invention, of a filter holder, of a filter and of a motor;
figure 4 is a perspective exploded view of an alternative embodiment of the brush according to the invention, of a filter holder, of a filter and of a motor;
figure 5 is a perspective view of the alternative brush according to the invention;
figure 6 is a side cut view of the alternative brush according to the invention, of a filter holder, of a filter and of a motor.

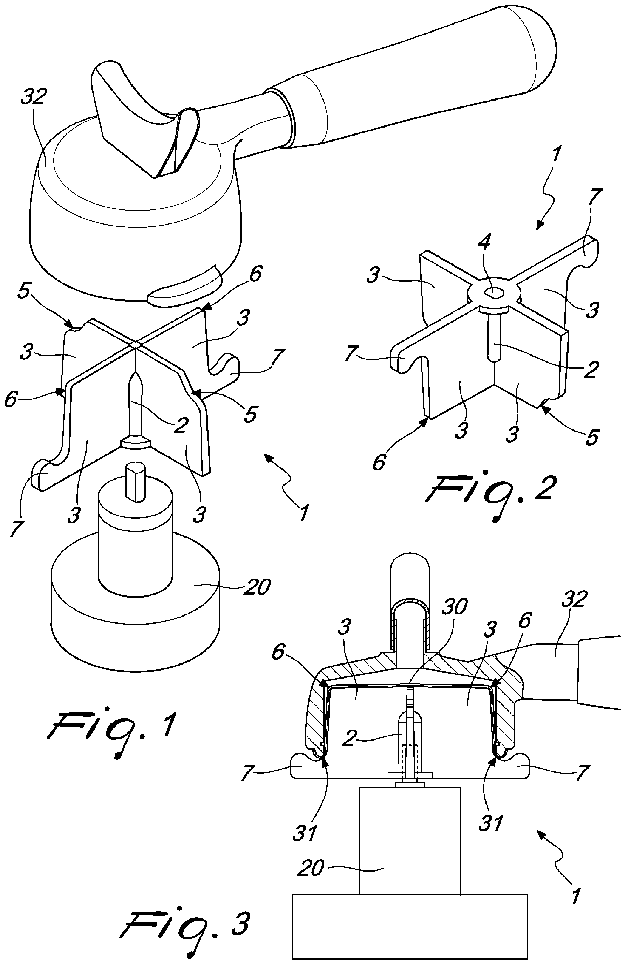

With reference to figures 1 to 3, a rotating brush, particularly for the cleaning of coffee machine filters, is generally indicated with reference numeral 1.

Brush 1 is essentially formed by a central support 2 and by a series of cleaning elements 3 connected to the central support through one of their ends.

In the illustrated examples, the cleaning elements 3 are monolithic with the central support 2; it twill however be clear to the skilled person that in some alternative embodiments the cleaning elements 3 could be connected to the central support 2 in other ways, for instance by clamping and/or interference, welding or gluing, without however extending beyond the inventive solution.

Advantageously, substantially at the symmetry axis of the central support 2 are provided adequate mounting means 4 to a rotating organ, such as, for instance, a motor 20 which, being per se known, is not described.

In an alternative embodiment, not illustrated in the attached figures, the rotating organ can consists of a manually actuated device, such as an actionable handle.

In the illustrated embodiment, the mounting means 4 essentially consist of a body having a cavity which can be associated to the driveshaft of the motor 20, realized in a plastic material or in metal and incorporated in the central support 2.

According to the present invention, each cleaning element 3 is constituted by a sheet-shaped body which, thanks also to the elastic characteristics of the plastic material with which it is realized, it allows bending movements such as to allow it to precisely follow, and with continuity, the internal surface of a filter 30 during the rotation of the brush 1.

In this sense the brush 1 can be realized with any material capable to guarantee to the cleaning elements 3 the required bending characteristics, as well as the necessary mechanical strength, such as thermoplastic or thermosetting elastomers, such as TPU, TPE, TPV, SEBS, PU, etc.

As a valid alternative the brush 1 can be made of silicon materials, such as for instance silicone HRC, RTV or LSR, or in synthetic or natural rubber.

In any case, the brush 1 is preferably realized with biodegradable or compostable plastics.

According to the present invention, the peripheral ends of the cleaning elements 3, suited to interact with the internal surface of the filter 30, are shaped so as to adapt to the filter 30.

More specifically, the brush 1 comprises one or more cleaning elements 3 the free end of which is delimited by a shaped edge 5 which reproduces, in negative, the internal profile of the filter 30.

Moreover, the brush 1 comprises one or more cleaning elements 3 in which the free end is delimited by a squared edge 6, which, using the flexibility of the sheet-shaped body, allows deeper cleaning of the filter 30.

It is particularly advantageous to provide one or more appendixes 7 which extend from the end of the cleaning elements 3 designed to interact with the edge 31 of the filter 30.

Suitably, the appendixes 7 are shaped so as to reproduce in negative the profile of the edge 31 of the filter 30.

In practice, while the cleaning elements 3 allow removing the coffee grounds from the interior of the filter 30, the appendixes 7 allow the adequate cleaning of the edge 31.

In the illustrated embodiment, for instance, the brush 1 is provided with four cleaning elements 3, two of which have the shaped edge 5 and two others which have the squared edge 6 and the appendixes 7.

It will however be clear to the skilled person that in some non-illustrated embodiments, the brush 1 could comprise a different number of cleaning elements 3, also with a different shape, without however extending beyond the inventive solution.

Experimental trials and an attentive analysis of the results have also allowed the inventors to note that the performance and the duration of the brush 1 improve if the thickness of the sheet-shaped bodies constituting the cleaning elements 3 progressively increases from their end designed to interact with the internal surface of the filter 30 toward the mounting point to the central support 2 and/or toward the base of the latter.

Moreover, at the base of the central support 2 it is also possible to define a protective element substantially annular, not illustrated in the attached figures, which is configured to protect the motor 20 from possible coffee grounds removed from the filter 30.

In a non-illustrated alternative embodiment, the brush 1 is furthermore equipped with an elastic metallic element adapted to interact with the filter 30 so as to clean deeper the internal surface thereof.

More specifically, such elastic metallic element can consist of a shaped spring associated to the central support 2 or to one of the cleaning elements 3.

Advantageously, the central support 2 has an external surface at least partially presenting a slope with respect to its base.

In the illustrated embodiment, in figures 1 to 3, for instance, the central support 2 is essentially formed by a body substantially cylindrical which ends with substantially conical tip.

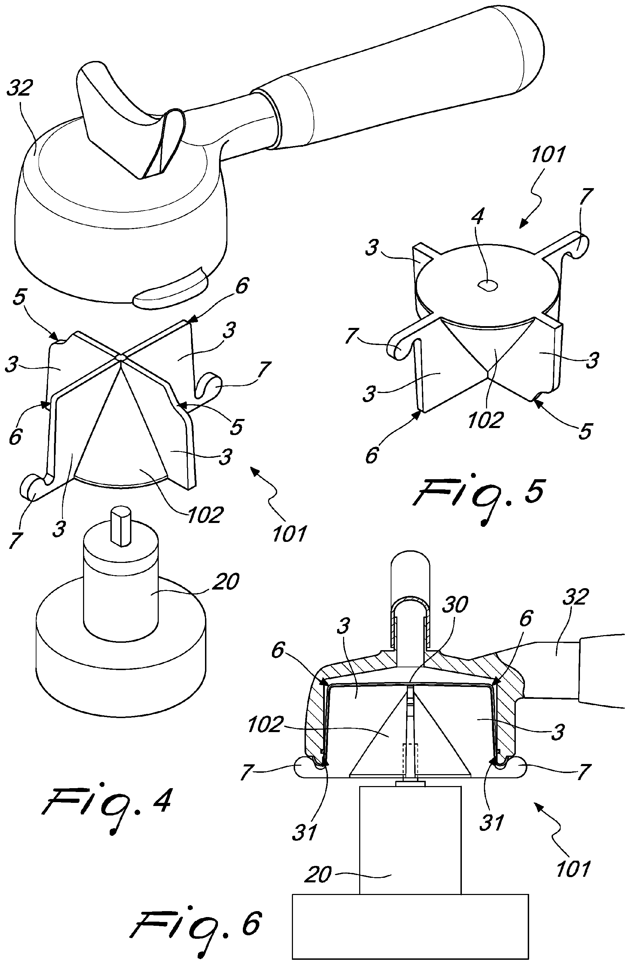

In the alternative embodiment illustrated in figures 4 to 6, instead, in which the brush according to the invention is indicated by reference numeral 101, the central support 102 is realized by a substantially conical body.

For the alternative embodiment illustrated in figures 4 to 6, the elements corresponding to elements already described with reference to the embodiment of figures 1 to 3 have been indicated by the same reference numerals.

The use of the rotating brush according to the invention results simple and effective.

The brush 1, or 101, is firstly mounted on the shaft of a motor 20 suitably adapted, or on an appropriate handle.

At this point it is possible to insert the brush into the filter 30 to be cleaned, which will be placed in a filter holder 32, and let the cleaning elements 3 and the appendixes 7, rotate, thereby removing the coffee grounds from the interior and from the edge 31.

The brush according to the invention can be disassembled with ease and, in the case in which it should be damaged, or used to such a point to become ineffective, it can be directly reprocessed with the wet part of the waste.

It has been noticed that the rotating brush, for the cleaning of the coffee machine filter, according to the invention, therefore fully achieves the above-described objects.

A brush has in fact been realized which, by being at least partially flexible, is capable of completely removing the coffee grounds from the coffee machine filter.

Moreover, the brush according to the invention allows a perfect cleaning of the filter with relatively gentle action.

This allows to preserve the integrity of the filter itself and reduce noise, while nevertheless maintaining a very high cleaning effect.

Another advantage of the brush according to the invention is that it can be mounted on any existing machine which uses hard brushes, or, alternatively, can be provided with a handle and used manually.

The brush according to the invention can moreover by realized in different configurations according to the user's needs.

The rotating brush, for the cleaning of a coffee machine filter, so conceived can be modified and implemented with alternatives all forming part of the inventive concept.

In practice, the used materials, as long as compatible with the specific use, as well as the dimensions and the shapes can vary in accordance with the needs and the state of the art.

## Claims

1. Coffee machine assembly comprising:
- a filter holder (32);
- a coffee machine filter (30) designed to be placed in said filter holder (30) and provided with an internal surface defining an internal profile susceptible of receiving coffee grounds;
- a rotating brush (1), for cleaning of said coffee machine filter (30), comprising a central support (2) provided with a symmetry axis and connectable to a rotating organ (20); and a plurality of cleaning elements (3) connected at an end thereof to said central support (2); wherein each of said cleaning elements (3) comprises a sheet-shaped body which is made of elastically deformable material and which has a planar development that extends along an axial direction, parallel to the symmetry axis of said central support (2), and along a radial direction;
said coffee machine assembly being **characterized in that** at least one of the sheet-shaped body of the cleaning elements (3) of said rotating brush (1) has a shaped edge (5) which represents the negative internal profile of said coffee machine filter (30) and is defined at an end of said sheet-shaped body for interacting with the internal surface of said coffee machine filter (30) in order to remove the coffee grounds from said coffee machine filter (30).

2. Coffee machine assembly, according to the previous claim, **characterized in that** the sheet-shaped bodies of the cleaning elements (3) of said rotating brush (1) are made of thermoplastic or thermosetting elastomers, such as for instance TPU, TPE, TPV, SEBS, or PU.

3. Coffee machine assembly, according to one or more of the preceding claims, **characterized in that** the sheet-shaped bodies of the cleaning elements (3) of said rotating brush (1) are made of silicon materials, such as for instance silicone HCR, RTV or LSR.

4. Coffee machine assembly, according to one or more of the preceding claims, **characterized in that** the sheet-shaped bodies of the cleaning elements (3) of said rotating brush (1) are made of synthetic or natural rubber.

5. Coffee machine assembly, according to one or more of the preceding claims, **characterized in that** the sheet-shaped bodies of the cleaning elements (3) of said rotating brush (1) are made of biodegradable or compostable plastics.

6. Coffee machine assembly, according to one or more of the preceding claims, **characterized in that** at least one of the sheet-shaped body of the cleaning elements (3) of said rotating brush (1) has a substantially squared edge (6); said substantially squared edge (6) is defined at an end of said sheet-shaped element for interacting with the internal surface of said coffee machine filter (30).

7. Coffee machine assembly, according to one or more of the preceding claims, **characterized in that** at least one of the sheet-shaped body of the cleaning elements (3) of said rotating brush (1) has an appendix (7) which represents the negative profile of the edge of said coffee machine filter (30); said appendix (7) is defined at an end of said sheet-shaped element for interacting with the edge of said coffee machine filter (30).

8. Coffee machine assembly, according to one or more of the preceding claims, **characterized in that** the sheet-shaped bodies of the cleaning elements (3) of said rotating brush (1) have, at their end connected to said central support(2) and/or directed to the base of said central support (2), a larger thickness with respect to the thickness of their end for interacting with the internal surface of said coffee machine filter (30).

9. Coffee machine assembly, according to one or more of the preceding claims, **characterized in that** said rotating brush (1) comprises a protective element substantially annular; said protective element being defined substantially at the base of said central support (2).

10. Coffee machine assembly, according to one or more of the preceding claims, **characterized in that** said rotating brush (1) comprises at least an elastic metallic element for interacting with the internal surface of said coffee machine filter (30); said elastic metallic element being associated to said central support (2) or to one of said sheet-shaped bodies.

11. Coffee machine assembly, according to one or more of the preceding claims, **characterized in that** the central support (2) of said rotating brush (1) has an external surface at least in part presenting a slope with respect to its base.

12. Coffee machine assembly, according to one or more of the preceding claims, **characterized in that** said rotating brush (1) comprise mounting means to said rotating organ (20); said mounting means being obtained substantially at the axis of symmetry of said central support (2).

## Patentansprüche

1. Kaffeemaschineneinheit umfassend:
- einen Filterhalter (32);
- einen Kaffeemaschinenfilter (30), der darauf ausgelegt ist, in den genannten Filterhalter (30) eingesetzt zu werden und mit einer ein Innenprofil, das geeignet ist, Kaffeesatz aufzunehmen, definierenden Innenfläche ausgestattet ist;
- eine rotierende Bürste (1) zum Reinigen des genannten Kaffeemaschinenfilters (30), umfassend einen mit einer Symmetrieachse versehenen mittigen Halter (2), der mit einem rotierenden Organ (20) verbunden werden kann; und eine Vielzahl von an einem Ende mit dem mittigen Halter (2) verbundenen Reinigungselementen (3); worin jedes der genannten Reinigungselemente (3) einen lamellenförmigen Körper aus elastisch verformbarem Werkstoff umfasst, der einen planaren Verlauf entlang einer axialen Richtung parallel zu der Symmetrieachse des genannten mittigen Halters (2) und entlang einer radialen Richtung aufweist;
wobei die genannte Kaffeemaschineneinheit **dadurch gekennzeichnet ist, dass** mindestens einer der lamellenförmigen Körper der Reinigungselemente (3) der genannten rotierenden Bürste (1) eine profilierte Kante (5) aufweist, die das negative Innenprofil des genannten Kaffeemaschinenfilters (30) darstellt und an einem Ende des genannten lamellenförmigen Körpers definiert ist, um mit der Innenfläche des genannten Kaffeemaschinenfilters (30) zusammenzuwirken, um den Kaffeesatz von dem genannten Kaffeemaschinenfilter (30) zu entfernen.

2. Kaffeemaschineneinheit nach dem vorangegangenen Anspruch, **dadurch gekennzeichnet, dass** die lamellenförmigen Körper der Reinigungselemente (3) der genannten rotierenden Bürste (1) aus thermoplastischen oder duroplastischen Elastomeren bestehen wie z. B. TPU, TPE, TPV, SEBS oder PU.

3. Kaffeemaschineneinheit nach einem oder mehreren der vorangegangenen Ansprüche, **dadurch gekennzeichnet, dass** die lamellenförmigen Körper der Reinigungselemente (3) der genannten rotierenden Bürste (1) aus Silikonwerkstoffen bestehen wie z. B. HCR oder RTV oder LSR.

4. Kaffeemaschineneinheit nach einem oder mehreren der vorangegangenen Ansprüche, **dadurch gekennzeichnet, dass** die lamellenförmigen Körper der Reinigungselemente (3) der genannten rotierenden Bürste (1) aus Synthese- oder Naturkautschuk bestehen.

5. Kaffeemaschineneinheit nach einem oder mehreren der vorangegangenen Ansprüche, **dadurch gekennzeichnet, dass** die lamellenförmigen Körper der Reinigungselemente (3) der genannten rotierenden Bürste (1) aus bioabbaubarem oder kompostierbarem Kunststoff bestehen.

6. Kaffeemaschineneinheit nach einem oder mehreren der vorangegangenen Ansprüche, **dadurch gekennzeichnet, dass** mindestens einer der lamellenförmigen Körper der Reinigungselemente (3) der genannten rotierenden Bürste (1) eine im Wesentlichen rechtwinklige Kante (6) aufweist; wobei die genannte im Wesentlichen rechtwinklige Kante (6) an einem Ende des genannten lamellenförmigen Elements zum Zusammenwirken mit der Innenfläche des genannten Kaffeemaschinenfilters (30) definiert wird.

7. Kaffeemaschineneinheit nach einem oder mehreren der vorangegangenen Ansprüche, **dadurch gekennzeichnet, dass** mindestens einer der lamellenförmigen Körper der Reinigungselemente (3) der genannten rotierenden Bürste (1) einen Fortsatz (7) aufweist, der das negative Profil des genannten Kaffeemaschinenfilters (30) darstellt; wobei der genannte Fortsatz (7) an einem Ende des genannten lamellenförmigen Elements zum Zusammenwirken mit der Innenfläche des genannten Kaffeemaschinenfilters (30) definiert wird.

8. Kaffeemaschineneinheit nach einem oder mehreren der vorangegangenen Ansprüche, **dadurch gekennzeichnet, dass** die lamellenförmigen Körper der Reinigungselemente (3) der genannten rotierenden Bürste (1) an ihrem mit dem mittigen Halter (2) verbundenen und/oder zur Basis des genannten mittigen Halters (2) gerichteten Ende eine größere Stärke im Vergleich zu der Stärke ihres Endes zum Zusammenwirken mit der Innenfläche des genannten Kaffeemaschinenfilters (30) aufweisen.

9. Kaffeemaschineneinheit nach einem oder mehreren der vorangegangenen Ansprüche, **dadurch gekennzeichnet, dass** die genannte rotierende Bürste (1) ein im Wesentlichen ringförmiges Schutzelement umfasst; wobei das benannte Schutzelement im Wesentlichen an der Basis (5) des genannten mittigen Halters (2) definiert wird.

10. Kaffeemaschineneinheit nach einem oder mehreren der vorangegangenen Ansprüche, **dadurch gekennzeichnet, dass** die genannte rotierende Bürste (1) mindestens ein elastisches Metallelement zum Zusammenwirken mit der Innenfläche des genannten Kaffeemaschinenfilters (30) umfasst; wobei das genannte elastische Metallelement mit dem genannten mittigen Halter (2) oder einem der genannten lamellenförmigen Körper verbunden ist.

11. Kaffeemaschineneinheit nach einem oder mehreren der vorangegangenen Ansprüche, **dadurch gekennzeichnet, dass** der mittige Halter (2) der genannten rotierenden Bürste (1) eine zumindest zum Teil im Verhältnis zu ihrer Basis geneigte Außenfläche aufweist.

12. Kaffeemaschineneinheit nach einem oder mehreren der vorangegangenen Ansprüche, **dadurch gekennzeichnet, dass** die genannte rotierende Bürste (1) Montagelemente zu dem genannten rotierenden Organ (20) umfasst; wobei diese Montagelemente im Wesentlichen an der Symmetrieachse des genannten mittigen Halters (2) erhalten werden.

## Revendications

1. Machine à café, comprenant :
- un support de filtre (32) ;
- un filtre pour machine à café (30) conçu pour être placé dans ledit support de filtre (30) et présentant une surface interne définissant un profil interne susceptible de réceptionner le café moulu ;
- une brosse rotative (1), pour nettoyer ledit filtre pour machine à café (30), comprenant un support central (2) présentant un axe de symétrie et pouvant être connecté à un organe de rotation (20) ; et une pluralité d'éléments de nettoyage (3) connectés par l'une de leurs extrémités audit support central (2) ; où chacun desdits éléments de nettoyage (3) comprend un corps en forme de feuille, composé d'un matériau déformable de manière élastique, qui présente une structure plane s'étendant selon une direction axiale, parallèle à l'axe de symétrie dudit support central (2), et le long d'une direction radiale ;
ladite machine à café étant **caractérisée en ce qu'**au moins l'un des corps en forme de feuille des éléments de nettoyage (3) de ladite brosse rotative (1) a un bord mis en forme (5), qui représente le profil interne négatif dudit filtre pour machine à café (30) et qui est défini à une extrémité dudit corps en forme de feuille pour interagir avec la surface interne dudit filtre pour machine à café (30) afin d'éliminer le café moulu dudit filtre pour machine à café (30).

2. Machine à café selon la revendication précédente, **caractérisée en ce que** les corps en forme de feuille des éléments de nettoyage (3) de ladite brosse rotative (1) sont composés d'élastomères thermoplastiques ou thermodurcissables, par exemple de TPU, TPE, TPV, SEBS ou PU.

3. Machine à café selon l'une ou plusieurs des revendications précédentes, **caractérisée en ce que** les corps en forme de feuille des éléments de nettoyage (3) de ladite brosse rotative (1) sont composés de matières de type silicone, par exemple silicone HCR, RTV ou LSR.

4. Machine à café selon l'une ou plusieurs des revendications précédentes, **caractérisée en ce que** les corps en forme de feuille des éléments de nettoyage (3) de ladite brosse rotative (1) sont composés de caoutchouc synthétique ou naturel.

5. Machine à café selon l'une ou plusieurs des revendications précédentes, **caractérisée en ce que** les corps en forme de feuille des éléments de nettoyage (3) de ladite brosse rotative (1) sont composés de matières plastiques biodégradables ou compostables.

6. Machine à café selon l'une ou plusieurs des revendications précédentes, **caractérisée en ce qu'**au moins l'un des corps en forme de feuille des éléments de nettoyage (3) de ladite brosse rotative (1) ont un bord sensiblement carré (6) ; ledit bord sensiblement carré (6) est défini à une extrémité dudit élément en forme de feuille pour interagir avec la surface interne dudit filtre pour machine à café (30).

7. Machine à café selon l'une ou plusieurs des revendications précédentes, **caractérisée en ce qu'**au moins l'un des corps en forme de feuille des éléments de nettoyage (3) de ladite brosse rotative (1) présente un appendice (7) qui représente le profil négatif du bord dudit filtre pour machine à café (30) ; ledit appendice (7) est défini à une extrémité dudit élément en forme de feuille pour interagir avec le bord dudit filtre pour machine à café (30).

8. Machine à café selon l'une ou plusieurs des revendications précédentes, **caractérisée en ce que** les corps en forme de feuille des éléments de nettoyage (3) de ladite brosse rotative (1) ont, au niveau de leur extrémité connectée audit support central (2) et/ou dirigée vers la base du support central (2), une épaisseur plus importante que l'épaisseur de leur extrémité pour interagir avec la surface interne du filtre pour machine à café (30).

9. Machine à café selon l'une ou plusieurs des revendications précédentes, **caractérisée en ce que** ladite brosse rotative (1) comprend un élément protecteur sensiblement annulaire ; ledit élément protecteur étant sensiblement défini à la base (5) dudit support central (2).

10. Machine à café selon l'une ou plusieurs des revendications précédentes, **caractérisée en ce que** ladite brosse rotative (1) comprend au moins un élément métallique élastique pour interagir avec la surface interne dudit filtre pour machine à café (30) ; ledit élément métallique élastique étant associé audit support central (2) ou à l'un desdits corps en forme de feuille.

11. Machine à café selon l'une ou plusieurs des revendications précédentes, **caractérisée en ce que** le support central (2) de ladite brosse rotative (1) comprend une surface externe présentant au moins en partie une pente par rapport à sa base.

12. Machine à café selon l'une ou plusieurs des revendications précédentes, **caractérisée en ce que** ladite brosse rotative (1) comprend des moyens de montage audit organe rotatif (20) ; lesdits moyens de montage étant sensiblement obtenus sur l'axe de symétrie dudit support central (2).
